# EUROPÄISCHE PATENTSCHRIFT

(11) **EP 1 989 945 B1**
(45) Veröffentlichungstag und Bekanntmachung des Hinweises auf die Patenterteilung: **07.11.2012**
(21) Anmeldenummer: 08008487.4
(22) Anmeldetag: 06.05.2008
(51) Int. Cl.: A24C 5/35, B65G 47/64, B65G 47/71

(54) **Chargenweiser Transport von stabförmigen Artikeln der Tabak verarbeitenden Industrie**
Batch transport of rod-shaped articles of the tobacco industry
Transport de charges d'articles en forme de tige de l'industrie de traitement du tabac

(30) Priorität: 09.05.2007 DE 102007022235
(43) Veröffentlichungstag der Anmeldung: 12.11.2008
(73) Patentinhaber: Hauni Maschinenbau AG, 21033 Hamburg (DE)
(72) Erfinder: Krößmann, Jürgen, 21493 Schwarzenbek (DE)
(74) Vertreter: Grebner, Christian Georg Rudolf

(56) Entgegenhaltungen:
- EP-A- 1 321 393
- EP-A- 1 439 140
- WO-A-2004/041683
- WO-A-2004/089122
- DE-A1- 3 742 093
- DE-A1-102006 014 182
- US-A- 4 723 649
- US-A- 5 944 165
- US-B1- 6 290 055

## Beschreibung

Die Erfindung betrifft eine Einrichtung zum Transport von stabförmigen Artikeln der Tabak verarbeitenden Industrie in einem Massenstrom zwischen Maschinen der Tabak verarbeitenden Industrie entlang einem Förderweg zwischen einem Ausgang einer ersten Maschine, insbesondere Herstellungsmaschine, zu einem Eingang einer zweiten Maschine, insbesondere Packmaschine, wobei entlang des Förderwegs eine verstellbare Verzweigungseinrichtung vorgesehen ist, so dass in Abhängigkeit der Stellung der Verzweigungseinrichtung wahlweise ein Massenstrom zum Eingang der zweiten Maschine oder zum Eingang einer anderen Vorrichtung der Tabak verarbeitenden Industrie gefördert wird.

In WO-A-031053178 ist eine Vorrichtung zur Verbindung einer Versorgungseinheit mit einer Verbrauchereinheit für die Herstellung von Tabakprodukten beschrieben. Hierbei wird ein Transportkanal zwischen einer Produktionseinrichtung (Maker) und einer Verpackungseinrichtung (Packer) mit einem in dem Kanal laufenden Wagen gereinigt.

Weiterhin ist aus DE-A-37 42 093 eine Einrichtung zur Überführung von Produkten der Tabak verarbeitenden Industrie zwischen Maschinen einer Produktionsstraße bekannt.

Darüber hinaus sind in EP-A-1 020 126 ein Verfahren und eine Vorrichtung zum Fördern von Zigaretten beschrieben.

Um beispielsweise bei einem Markenwechsel von Zigaretten eine Produktmischung in einem Transportkanal zu verhindern, wird der Transportkanal auf dem Transportweg von stabförmigen Artikeln der Tabak verarbeitenden Industrie in einer Zufuhr- und Übertragungseinrichtung (Rod Transfer System (RTS)) und einem anschließenden Speicher (Flexible Mass Follow Reservoir (FMR)) die Strecken leergefahren, um eine Trennung zwischen unterschiedlichen Loosen, Chargen und/oder Beschickungen mit stabförmigen Artikeln der Tabak verarbeitenden Industrie zu erhalten.

In EP-A-1 321 393 ist ein Bandförderer zur Verteilung von Produkten offenbart, wobei an einem Ende auf der Eingangsseite ein endloses Förderband fix angeordnet ist, während das andere Ende des Förderbands an der Abgabeseite beweglich ist. Um die Abgabeseite in ihrer Position zu ändern, ist hierzu ein Antrieb vorgesehen, so dass die Abgabeseite über eine Verstelleinrichtung mit einer Führungsschiene quer zur Förderrichtung des Förderbands eingestellt wird.

Weiterhin offenbart US-A-5 944 165 eine Verteilvorrichtung, wobei Artikel, wie zum Beispiel Pakete oder dergleichen, eingangsseitig der Vorrichtung zugefördert werden und in einem Eingangskanal abgegeben werden.

Überdies offenbart WO-A-2004/041683 eine Vorrichtung zur Umlenkung aufeinander folgender Artikel aus einem Förderweg in mehrere Förderwege. Hierbei verfügt die Vorrichtung über zwei parallel angeordnete flexible Führungswände, wobei die Austrittsseite mittels eines Motors quer zur Förderrichtung bewegt wird. Außerdem sind die Führungswände in Förderrichtung entlang einer oberseitigen Schiene bewegbar.

Außerdem offenbart EP-A-1 439 140 ein Verteilsystem für Gegenstände. Hierbei weist das Verteilsystem einen ersten Verteiler und einen zweiten Verteiler auf, wobei der erste Verteiler schwenkbar gelagert ist und die beiden Verteiler hintereinander angeordnet sind.

Ausgehend von diesem Stand der Technik ist es Aufgabe der vorliegenden Erfindung, beim Massentransport von stabförmigen Artikeln in Chargen oder dergleichen eine Umlenkung des Massenstroms, insbesondere in einer Förderebene, auf einfache Weise bereitzustellen, wobei die Umlenkung des Massenstroms produktschonend erfolgen soll.

Gelöst wird diese Aufgabe durch eine Einrichtung zum Transport von stabförmigen Artikeln der Tabak verarbeitenden Industrie in einem Massenstrom zwischen Maschinen der Tabak verarbeitenden Industrie entlang einem Förderweg zwischen einem Ausgang einer ersten Maschine, insbesondere Herstellungsmaschine, zu einem Eingang einer zweiten Maschine, insbesondere Packmaschine, wobei entlang des Förderwegs eine verstellbare Verzweigungseinrichtung vorgesehen ist, so dass in Abhängigkeit der Stellung der Verzweigungseinrichtung wahlweise ein Massenstrom zum Eingang der zweiten Maschine oder zum Eingang einer anderen Vorrichtung der Tabak verarbeitenden Industrie gefördert wird, die dadurch weitergebildet wird, dass in Bezug auf die Förderrichtung des Massenstroms hinter dem Ausgang der ersten Maschine seitliche und flexibel biegbare Führungsschienen für den Förderweg des Massenstroms vorgesehen sind, wobei die seitlichen Führungsschienen für den Förderweg einen Förderabschnitt zur Förderung des Massenstroms begrenzen, wobei die Führungsschienen in einem vorbestimmten Abstand zueinander angeordnet sind und Distanzstücke zwischen den Führungsschienen quer zur Förderrichtung des Massenstroms in einem vorbestimmten Abstand zueinander vorgesehen sind, wobei die Führungsschienen an ihrer Eingangsseite ortsfest ausgebildet sind und an ihrer Ausgangsseite beweglich oder bewegbar sind und die Führungsschienen je nach einer vorbestimmten Betriebsart der Einrichtung mittels eines Antriebs ausgangsseitig dem Eingang der zweiten Maschine oder dem Eingang einer anderen Vorrichtung zugestellt werden, wobei die biegbaren Führungsschienen mittels der dazwischen angeordneten Distanzstücke bei Krümmung der Führungsschienen in einem vorbestimmten Abstand gehalten werden.

Dadurch, dass nach bzw. hinter dem Ausgang einer ersten Maschine der Tabak verarbeitenden Industrie im Förderweg des Artikelmassenstroms, z.B. von fertigen Zigaretten, in einem Förderabschnitt vor dem Eingang einer zweiten Maschine oder einer nachfolgenden anderen Vorrichtung der Förderabschnitt mittels der Führungsschienen ausgebildet wird, wobei die Führungsschienen biegbar oder flexibel ausgebildet sind, so dass die Führungsschienen in einem vorbestimmten Winkelbereich verschwenkbar sind bzw. verschwenkt werden, wird auf einfache Weise eine schonende Umlenkung des Massenstroms erreicht. Hierbei werden die Führungsschienen im Führungsabschnitt leicht bzw. geringfügig gebogen, wobei der Krümmungsradius der Führungsschienen aufgrund der Krümmung der Führungsschienen sehr groß ist.

Gemäß der Erfindung ist vorgesehen, den Massenstrom der Artikel um einen kleinen Winkel gegenüber der ursprünglichen Förderrichtung, d.h. quer zur ursprünglichen Förderrichtung bei Eintritt des Massenstroms in den Förderabschnitt mit den Führungsschienen umzulenken. Dabei bilden insbesondere die Winkel der Förderrichtung beim geradlinigen Eintritt des Massenstroms in den Förderabschnitt mit den seitlichen Führungsschienen gegenüber der Förderrichtung am Ausgang des Förderabschnitts an den seitlichen Führungsschienen einen spitzen Winkel α, wobei 0° ≤ α < 90° gilt.

Dadurch, dass zwischen den Führungsschienen Distanzstücke vorgesehen sind, werden die Führungsschienen bei Krümmung der Schienen und mit Umlenkung des Massenstroms der stabförmigen Artikel in einem Abstand zueinander gehalten, wobei der Querabstand zwischen den Führungsschienen nahezu konstant gehalten wird. Dies wird auch durch die geringfügige Auslenkung der Führungsschienen erreicht. Insgesamt wird dadurch der Durchsatz bzw. die gleichmäßige Förderung des Massenstroms bzw. der Artikelchargen durch den Förderabschnitt mit den Führungsschienen erreicht.

Durch die erfindungsgemäße Weiterbildung der Einrichtung wird außerdem erreicht, dass der Massenstrom der Artikel produktschonend, d.h. dass die Artikel des Massenstroms bei oder während der Umlenkung mechanisch nicht oder kaum beansprucht werden. Demgegenüber werden bei bekannten T-förmigen Verzweigungen, die einen Massenstrom beispielsweise auf einen darunterliegenden Massenstrom abgeben, die einzelnen Produkte des Massenstroms zweimal um 90° umgelenkt, so dass durch diese Art der Umlenkungen die mechanisch sensiblen Produkte wie Filterzigaretten nicht geschont werden und daher mechanisch stark beansprucht werden.

Darüber hinaus ist in einer Weiterbildung vorgesehen, dass eingangsseitig der Führungsschienen eine Sensoreinrichtung vorgesehen ist, wodurch festgestellt wird, ob der Förderweg und auch der Förderabschnitt mit den seitlichen Führungsschienen mit einem Artikel-Massenstrom befüllt ist. Darüber hinaus kann die Sensoreinrichtung auch derart ausgestaltet sein, dass beispielsweise ein Kanalräummittel, wie es in der europäischen Patentanmeldung EP-A-1 712 141 beschrieben ist, erkannt wird, dass im Transportkanal für einen Massenstrom eine Artikelcharge von einem anderen Massenstrom trennt bzw. den entsprechenden Förderabschnitt bei Förderung des Räummittels von vorher geförderten stabförmigen Artikeln freiräumt. Durch die Erkennung des Räummittels mittels der Sensoreinrichtung bei Förderung des Räummittels durch den Förderabschnitt ist es möglich, dass aus dem Förderabschnitt zwischen der Eingangsseite der Führungsschiene und der Ausgangsseite die stabförmigen Artikeln entfernt werden, so dass in einem nachfolgenden Betriebsschritt die Betriebsart der Einrichtung verändert wird und die Ausgangsseite des Förderabschnitts mit den Führungsschienen einem anderen Eingang zugeordnet bzw. zugestellt wird. Dadurch ergibt sich ein sicherer Betrieb der erfindungsgemäßen Transporteinrichtung im Bereich der Führungsschienen zwischen der Eingangsseite und der Ausgangsseite. Darüber hinaus ist es in einer weiteren Ausgestaltung der Sensoreinrichtung denkbar, dass auch Lücken in der Artikelcharge bzw. im Artikelmassenstrom erfasst werden.

Dadurch, dass die Distanzstücke zwischen den Führungsschienen jeweils an einer Seite der Führungsschienen fest angeordnet sind, wird erreicht, dass die biegsamen Führungsschienen mittels der dazwischen angeordneten Distanzstücke stets in einem vorbestimmten Abstand bei entsprechender Krümmung der Führungsschiene gehalten werden, wobei dadurch der Förderungsquerschnitt zwischen der Eingangsseite an den Führungsschienen und der Ausgangsseite an den Führungsschienen im Wesentlichen unverändert bzw. geringfügig geändert wird, wodurch eine schonende Führung und gleichzeitige Umlenkung der Artikel des Massenstroms erreicht wird. Insbesondere sind die Distanzstücke jeweils an einer Seite der Führungsschiene fest angeordnet, während auf der gegenüberliegenden Seite an den Distanzstücken die Distanzstücke keine Verbindung mit der anderen Führungsschiene besitzen. Insbesondere ist die Breite der Distanzstücke hierbei kleiner als der Abstand der Führungsschienen, z.B. bei einer Stellung der Führungsschienen, in der keine Umlenkung des Massenstroms erfolgt, d.h. dass der Massenstrom ohne Richtungsänderung durch den Förderabschnitt zwischen den Führungsschienen gefördert wird.

Um einen sicheren Transfer vom Ausgang der ersten Maschine zu einem Eingang einer zweiten Maschine oder einer anderen Vorrichtung zu erreichen, ist vorteilhafterweise im Förderabschnitt zwischen der Eingangsseite der Führungsschienen und der Ausgangsseite der Führungsschienen wenigstens eine Fördereinrichtung, insbesondere Kettenförderer, vorzugsweise ein Kettenförderer mit einem Antrieb, vorgesehen. Hierbei ist insbesondere das Förderband ebenfalls flexibel ausgebildet, so dass die Krümmung der Führungsschienen bei Umlenkung eines Massenstroms synchron mit der Fördereinrichtung bzw. dem Kettenförderer, insbesondere synchron, mitbewegt wird.

Um eine sichere Überführung der Artikel des Massenstroms zwischen der Eingangsseite und der Ausgangsseite der Führungsschienen zu erreichen, ist ferner ein Antrieb für die Fördereinrichtung vorgesehen.

Dadurch, dass der Antrieb an der Ausgangsseite der Führungsschienen angeordnet ist oder wird, wird eine platzsparende Ausbildung des Antriebs an den Führungsschienen möglich.

Gemäß einer weiteren vorteilhaften Ausgestaltung ist vorgesehen, dass an der Ausgangsseite der Führungsschienen ein Führungsträger vorgesehen ist, so dass die Ausgangsseite der Führungsschienen in Bezug auf die Förderrichtung quer zur Förderrichtung des Massenstroms bewegt oder geführt ist oder wird.

Insbesondere sind die Führungsschienen derart bewegbar bzw. krümmbar, dass mittels der Führungsschienen der Massenstrom in Bezug auf die eingangsseitige und ausgangsseitige Förderrichtung an den Führungsschienen um einen Winkel zwischen 0° und 45°, vorzugsweise zwischen 0° und 30°, umgelenkt wird oder ist. Dadurch wird eine besonders schonende Umlenkung der Artikel des Massenstroms zwischen der Eingangs- und der Ausgangsseite der Führungsschienen erreicht.

Vorteilhafterweise wird die Förderung des Massenstroms im Bereich der Führungsschienen in einer, vorzugsweise horizontalen, Ebene ausgeführt oder findet in der, vorzugsweise horizontalen, Ebene statt.

Darüber hinaus zeichnet sich die Einrichtung dadurch aus, dass die Änderung einer Zustellung der Führungsschienen zu einem anderen Eingang an der Ausgangsseite der Führungsschienen ohne Anwesenheit von stabförmigen Artikeln zwischen der Eingangsseite und der Ausgangseite der Führungsschienen ausgeführt wird oder ist.

Die Erfindung wird nachstehend ohne Beschränkung des allgemeinen Erfindungsgedankens anhand eines Ausführungsbeispiels unter Bezugnahme auf die beigefügten schematischen Zeichnungen exemplarisch beschrieben, auf die im Übrigen bezüglich der Offenbarung aller im Text nicht näher erläuterten erfindungsgemäßen Einzelheiten ausdrücklich verwiesen wird. Es zeigen:

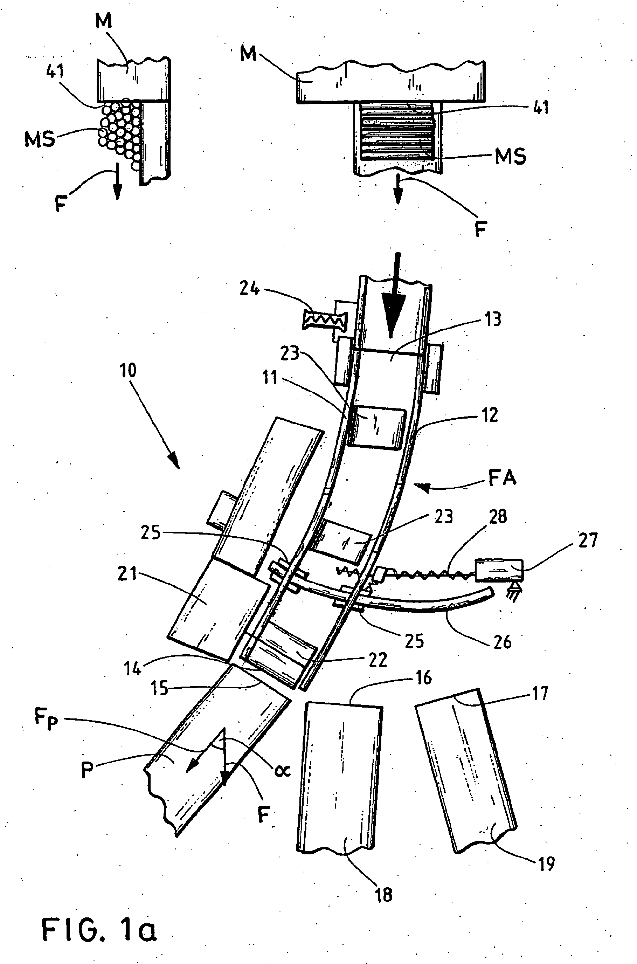

- Fig. 1a: eine Draufsicht auf einen Förderabschnitt zwischen einem Ausgang einer ersten Maschine der Tabak verarbeitenden Industrie im Übergangsbereich zu drei Eingängen von nachfolgenden Vorrichtungen der Tabak verarbeitenden Industrie;

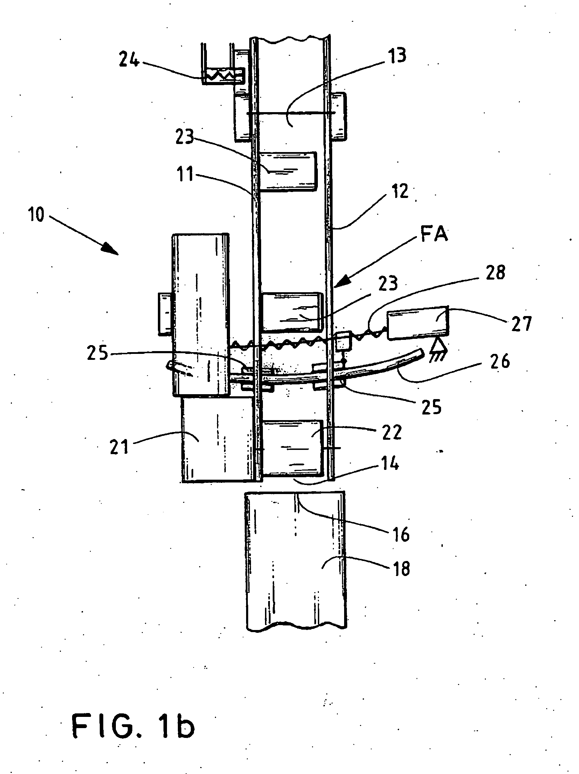

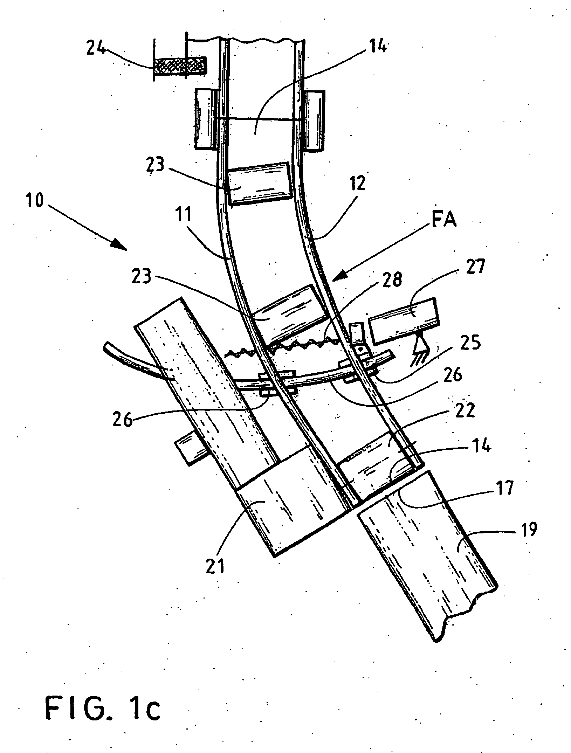

- Fig. 1 b: den Übergangsbereich wie in Fig. 1a, wobei eine geradlinige Überführung des Massenstroms stattfindet und
- Fig. 1c: eine Draufsicht auf den Überführungsbereich gemäß Fig. 1a, wobei der Massenstrom dem Eingang einer dritten nachfolgenden Vorrichtung zugestellt ist.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

Fig. 1 zeigt schematisch die Förderung eines Massenstroms MS der von einer Herstellungsmaschine M, die über einen Ausgang 41 verfügt, über den der Massenstrom MS aus der Herstellungsmaschine M herausgefördert wird. Der Massenstrom MS an stabförmigen Artikeln ist schematisch in Fig. 1a eingezeichnet und besteht beispielsweise aus fertig hergestellten Filterzigaretten oder Filterstäben, die nebeneinander sowie übereinander liegend queraxial weitertransportiert werden. Der Massenstrom MS wird entlang eines Förderweges F, der in Fig. 1a schematisch mit einem Pfeil angedeutet ist, weitergefördert. Die Förderrichtung ist dabei senkrecht bzw. quer zu den Längsachsen der Artikel des Massenstroms MS.

In Fig. 1a ist im oberen Bereich in der linken Zeichnung schematisch eine Seitenansicht des Ausgangs 41 der Herstellungsmaschine M gezeigt.

Entlang des Förderweges F kann beispielsweise auch eine Zufuhr- und Übertragungseinrichtung (Rod Transfer System (RTS)) bzw. eine Stabübertragungseinrichtung vorgesehen sein. Eine derartige Übertragungseinrichtung ist beispielsweise im Dokument DE-A-10 2005 018 302 (vgl. Fig. 1) ausführlich beschrieben.

Entlang des Förderweges F wird der Massenstrom MS zu einer Überführungseinrichtung 10 gefördert. Die Überführungseinrichtung 10 verfügt über flexible bzw. verbiegbare Führungsschienen 11, 12, die einen Führungsabschnitt FA begrenzen. Der Führungsabschnitt FA, der von den Führungsschienen 11, 12 gebildet wird, verfügt über einen Eingang 13 und einen Ausgang 14. Dadurch, dass der Ausgang 14 am Ende der Führungsschienen 11, 12 vorgesehen ist, kann der Ausgang 14 je nach Stellung der Führungsschienen 11, 12 (vgl. Fig. 1b und 1c) zu verschiedenen Eingängen von Vorrichtungen der Tabak verarbeitenden Industrie zugestellt werden. In Fig. 1a ist der Ausgang 14 des Führungsabschnitts FA dem Eingang 15 einer weiteren Maschine P der Tabak verarbeitenden Industrie, beispielsweise einer Packmaschine, zugeordnet.

Die Förderrichtung Fₚ des zur Maschine P übergeführten Massenstroms ist gegenüber der ursprünglichen Richtung F um einen spitzen Winkel α umgelenkt.

Darüber hinaus ist es in weiteren Ausgestaltungen möglich, den Ausgang 14 des Führungsabschnittes FA anderen Eingängen 16, 17 weiterer Vorrichtungen 18, 19 der Tabak verarbeitenden Industrie durch Verbiegen der flexiblen Führungsschienen 11, 12 zuzustellen. In Fig. 1a sind schematisch die weiteren Eingänge 16, 17 für einen Auffangbehälter 18 und einen weiteren Auffangbehälter 19 im Schwenkbereich des Ausgangs 14 angeordnet.

Beispielsweise wird die Vorrichtung 18 dazu genutzt, um ein Räummittel wie in der deutschen Anmeldung DE-A-10 2005 018 302 beschrieben, bei entsprechender Stellung der Führungsschienen 11, 12 auszuschleusen. Die Vorrichtung 19 kann dazu verwendet werden, beispielsweise einen Ausschuss oder eine Charge von stabförmigen Artikeln auszuschleusen und in einem Auffangbehälter aufzufangen.

Die Führungsschienen 11, 12 sind auf der Eingangsseite, d.h. im Bereich des Eingangs 13, ortsfest angeordnet, wobei der Ausgang 14 des durch die Führungsschienen 11, 12 begrenzten Führungsabschnittes FA den verschiedenen Eingängen 15, 16, 17 je nach gewünschter bzw. vorbestimmter Betriebsart zugeordnet bzw. zugestellt werden kann.

Um eine Förderung der zugeförderten Artikel des Massenstroms MS im Förderabschnitt FA, vorzugsweise in einer horizontalen Ebene, zu erreichen, ist am Ende im Bereich des Ausgangs 14 eine Antriebseinheit 21 angeordnet, die eine entsprechende Antriebsrolle 22 eines Kettenförderers zwischen den Führungsschienen 11, 12 im Bereich des Ausgangs 14 antreibt. Aus Gründen der Übersichtlichkeit wurde von der Darstellung eines Kettenförderers abgesehen. Der Kettenförderer im Bereich zwischen dem Eingang 13 und dem Ausgang 14 ist aufgrund der Verschwenkbarkeit der Führungsschienen 11, 12 in einer Ausgestaltung mit in sich gegeneinander bewegbaren Kettengliedern ausgebildet, um den Bewegungen der Führungsschienen 11, 12 entsprechend zu folgen.

Darüber hinaus sind an der Führungsschiene 14 entlang des Förderwegs zwischen dem Eingang 13 und dem Ausgang 14 Distanzstücke 23 in vorbestimmten Abständen entlang dem Führungsabschnitt FA befestigt, so dass bei Verbiegen der Führungsschienen 11, 12 der Abstand zwischen den Führungsschienen 11, 12 über die gesamte Länge zwischen dem Eingang 13 und dem Ausgang 14 nahezu konstant bleibt, so dass die hindurchgeförderten Artikel des Massenstroms MS nicht mechanisch beansprucht, d.h. zusammengedrückt oder ähnliches werden. Die Distanzstücke 23 sind nur an einer Seite, im vorliegenden Fall an der Führungsschiene 11 befestigt, während sie zur anderen Seite bzw. gegenüberliegenden Führungsschiene 12 keinen dauerhaft festen Kontakt haben.

Die Breite der Distanzstücke 23 ist kleiner als der Abstand der Führungsschienen 11, 12 bei geradliniger Förderung der Artikel des Massenstroms, d.h. ohne Umlenkung des Massenstroms (vgl. Ausführungsbeispiel in Fig. 1b), d.h. bei paralleler Anordnung der Führungsschienen 11, 12 zueinander.

An der Eingangsseite des Führungsabschnittes FA ist außerdem ein Sensor 24 seitlich angeordnet, mittels dem Lücken im Massenstrom oder auch ein Räummittel, wie es im Dokument DE-A-10 2005 018 302 beschrieben ist, erkannt werden.

Um die Führungsschienen 11, 12 zu verstellen, sind an der Unterseite der Führungsschienen 11, 12 entsprechende Führungsglieder 25 angeordnet, die im Eingriff mit einem Führungsträger 26 stehen, so dass die Führungsschiene 11,12 auf dem gebogenen Führungsträger 26 bei einer Verschwenkung entsprechend bewegt werden. Hierzu ist seitlich eine Verstelleinheit 27 seitlich im Bereich des Führungsträgers 26 angeordnet, die über eine entsprechende Antriebsspindel 28 mit der Führungsschiene 12 verbunden ist, so dass durch Drehen der Antriebsspindel 28 die Führungsschienen 11, 12 aus ihrer Position bewegt werden, so dass der Ausgang des Führungsabschnittes FA einem anderen Eingang zugestellt wird.

Die Bewegung der Führungsschienen 11, 12 erfolgt vorzugsweise bei einem Stop des Massenstroms, wobei vorteilhafterweise der Führungsabschnitt FA zwischen dem Eingang 13 und dem Ausgang 14 leer ist. Hierzu wird beispielsweise der Führungsabschnitt FA mit einem Räummittel, wie oben genannt, leergefahren.

Durch die erfindungsgemäße Überführungseinrichtung 10 ist es möglich, auf einfache Weise den Förderweg F mit unterschiedlichen Funktionseinheiten bzw. Vorrichtungen zu koppeln, wobei auf schonende Weise eine Umlenkung zu den Eingängen 15, 16, 17 der drei Vorrichtungen P, 18, 19 erfolgt. Mittels der Überführungseinrichtung 10 es möglich, fehlerhafte Massenstromchargen aus dem Produktionsprozess auszuschleusen, so dass die fehlerhafte Charge nicht einer Weiterverarbeitungsmaschine, wie z.B. der Packmaschine P, zugestellt werden.

Durch Verstellung bzw. Bewegung des Ausgangs 14 des beweglichen Führungsabschnittes FA kann die fehlerhafte Charge mit stabförmigen Artikeln der Tabak verarbeitenden Industrie beispielsweise dem Auffangbehälter zugefördert werden (vgl. Fig. 1 c).

Mittels der erfindungsgemäßen Überführungseinrichtung 10 wird eine Art Massenstromweiche bereitgestellt, bei der die Umlenkung von Massenströmen mit stabförmigen Artikeln produktschonend auf einer Transportebene erfolgt. Die Umorientierung bzw. Umlenkung des Massenstroms MS in einen entsprechenden Eingang einer nachfolgenden Vorrichtung der Tabak verarbeitenden Industrie erfolgt in einem kleinen Schwenkbereich des Eingangs 14, wobei die Krümmungsradien der Führungsschienen 11, 12 sehr groß sind. Typischerweise liegen die Krümmungsradien der Führungsschienen in einer Größenordnung von 5 m bis 30 m.

In Fig. 1b ist die Überführungseinrichtung 10 dargestellt, bei der die Führungsschienen 11, 12 parallel zueinander angeordnet sind, so dass ein geradliniger Transport zwischen dem Eingang 13 und dem Ausgang 14 zum Eingang 16 der nachfolgenden Vorrichtung 18 erfolgt.

Darüber hinaus ist in Fig. 1c die dritte Position der Überführungseinrichtung dargestellt, wobei dem Eingang 17 der Vorrichtung 19, z.B. einem Auffangbehälter, der Ausgang 14 der Überführungseinrichtung 10 zugestellt wird.

Beispielsweise kann mittels der Überführungseinrichtung 10 ein schneller Markenwechsel von einer ersten Marke auf eine zweite Marke erfolgen, wenn zwischen den Massenstromchargen beispielsweise ein entsprechender Trennkörper oder Raumkörper sich befindet. Hierbei kann beispielsweise die dem Raumkörper voraneilende Artikelcharge der Packmaschine P (vgl. Fig. 1a, Bezugszeichen P) zugefördert werden, nach Erkennung des Trenn- bzw. Raumkörpers mittels des Sensors 24 und Positionsänderung der Führungsschienen 11, 12 der Raumkörper dem Auffangbehälter bzw. der Vorrichtung 18 zugefördert werden und anschließend die zweite Massenstromcharge dem Eingang 17 (vgl. Fig. 1c) einer weiteren Vorrichtung, z.B. einer Packmaschine, zugefördert werden.

### Bezugszeichenliste

- 10: Überführungseinrichtung
- 11, 12: Führungsschiene
- 13: Eingang
- 14: Ausgang
- 15: Eingang
- 16: Eingang
- 17: Eingang
- 18: Vorrichtung
- 19: Vorrichtung
- 21: Antriebseinheit
- 22: Antriebsrolle
- 23: Distanzstück
- 24: Sensor
- 25: Führungsglieder
- 26: Führungsträger
- 27: Verstelleinheit
- 28: Antriebsspindel
- 41: Ausgang
- F: Förderweg
- Fₚ: Förderrichtung
- M: Herstellungsmaschine
- MS: Massenstrom
- P: Packmaschine
- FA: Förderabschnitt
- α: Winkel

## Patentansprüche

1. Einrichtung (10) zum Transport von stabförmigen Artikeln der Tabak verarbeitenden Industrie in einem Massenstrom (MS) zwischen Maschinen der Tabak verarbeitenden Industrie (M, P) entlang einem Förderweg (F) zwischen einem Ausgang (41) einer ersten Maschine (M), insbesondere Herstellungsmaschine (M), zu einem Eingang (15) einer zweiten Maschine (P), insbesondere Packmaschine (P), wobei entlang des Förderwegs (F) eine verstellbare Verzweigungseinrichtung vorgesehen ist, so dass in Abhängigkeit der Stellung der Verzweigungseinrichtung wahlweise ein Massenstrom (MS) zum Eingang (15) der zweiten Maschine (P) oder zum Eingang (16, 17) einer anderen Vorrichtung (18, 19) der Tabak verarbeitenden Industrie gefördert wird, **dadurch gekennzeichnet, dass** in Bezug auf die Förderrichtung des Massenstroms (MS) hinter dem Ausgang (41) der ersten Maschine (M) seitliche und flexibel biegbare Führungsschienen (11, 12) für den Förderweg (F) des Massenstroms (MS) vorgesehen sind, wobei die seitlichen Führungsschienen (11, 12) für den Förderweg (F) einen Förderabschnitt (FA) zur Förderung des Massenstroms (MS) begrenzen, wobei die Führungsschienen (11) in einem vorbestimmten Abstand zueinander angeordnet sind und Distanzstücke (23) zwischen den Führungsschienen (11, 12) quer zur Förderrichtung des Massenstroms (MS) in einem vorbestimmten Abstand zueinander vorgesehen sind, wobei die Führungsschienen (11, 12) an ihrer Eingangsseite (13) ortsfest ausgebildet sind und an ihrer Ausgangsseite (14) beweglich oder bewegbar sind und die Führungsschienen (11, 12) je nach einer vorbestimmten Betriebsart der Einrichtung (10) mittels eines Antriebs (27) ausgangsseitig dem Eingang (15) der zweiten Maschine (P) oder dem Eingang (16, 17) einer anderen Vorrichtung (18, 19) zugestellt werden, wobei die biegbaren Führungsschienen (11, 12) mittels der dazwischen angeordneten Distanzstücke (23) bei Krümmung der Führungsschienen (11, 12) in einem vorbestimmten Abstand gehalten werden.

2. Einrichtung (10) nach Anspruch 1. **dadurch gekennzeichnet, dass** eingangsseitig der Führungsschienen (11, 12) eine Sensoreinrichtung (24) vorgesehen ist.

3. Einrichtung (10) nach Anspruch 1 oder 2, **dadurch gekennzeichnet, dass** die Distanzstücke (23) an einer Seite der Führungsschienen (11, 12) fest angeordnet sind.

4. Einrichtung (10) nach einem der Ansprüche 1 bis 3, **dadurch gekennzeichnet, dass** im Förderabschnitt (FA) zwischen der Eingangsseite (13) der Führungsschienen und der Ausgangsseite (14) der Führungsschienen (11, 12) wenigstens eine Fördereinrichtung, insbesondere Kettenförderer, vorzugsweise ein Kettenförderer mit einem Antrieb (21), vorgesehen ist.

5. Einrichtung (10) nach Anspruch 4, **dadurch gekennzeichnet, dass** ein Antrieb (21) für die Fördereinrichtung vorgesehen ist.

6. Einrichtung (10) nach Anspruch 5, **dadurch gekennzeichnet, dass** der Antrieb (21) an der Ausgangsseite (14) der Führungsschienen (11, 12) angeordnet ist.

7. Einrichtung (10) nach einem der Ansprüche 1 bis 6, **dadurch gekennzeichnet, dass** an der Ausgangsseite (14) der Führungsschienen (11, 12) ein Führungsträger (26) vorgesehen ist, so dass die Ausgangsseite (14) der Führungsschienen (11. 12) in Bezug auf die Förderrichtung quer zur Förderrichtung bewegt oder geführt ist oder wird.

8. Einrichtung (10) nach einem der Ansprüche 1 bis 7, **dadurch gekennzeichnet, dass** die Führungsschienen (11, 12) derart bewegbar sind, dass mittels der Führungsschienen (11, 12) der Massenstrom in Bezug auf die eingangsseitige und ausgangsseitige Förderrichtung an den Führungsschienen (11, 12) um einen Winkel zwischen 0° und 45°, vorzugsweise zwischen 0° und 30°, umgelenkt wird oder ist.

9. Einrichtung (10) nach einem der Ansprüche 1 bis 8, **dadurch gekennzeichnet, dass** die Förderung des Massenstroms (MS) im Bereich der Führungsschienen (11, 12) in einer, vorzugsweise horizontalen, Ebene ausgeführt wird oder stattfindet.

## Claims

1. Apparatus (10) for transporting rod-shaped articles in the tobacco-processing industry in a mass flow (MS) between machines in the tobacco-processing industry (M, P) along a conveying path (F) between an output (41) of a first machine (M), in particular a manufacturing machine (M), to an input (15) of a second machine (P), in particular a packing machine (P), wherein an adjustable branching apparatus is provided along the conveying path (F) so that, as a function of the position of the branching apparatus, optionally a mass flow (MS) is conveyed to the input (15) of the second machine (P) or to the input (16, 17) of another device (18, 19) in the tobacco-processing industry, **characterised in that** with regard to the conveying direction of the mass flow (MS) lateral and flexibly bendable guide rails (11, 12) are provided for the conveying path (F) of the mass flow (MS) behind the output (41) of the first machine (M), wherein the lateral guide rails (11, 12) for the conveying path (F) delimit a conveying section (FA) for conveying the mass flow (MS), wherein the guide rails (11) are arranged at a pre-determined distance to one another and spacers (23) are provided between the guide rails (11, 12) transversely to the conveying direction of the mass flow (MS) at a pre-determined distance to one another, wherein the guide rails (11, 12) are developed in a fixed manner on their input side (13) and on their output side (14) are manoeuvrable or moveable and the guide rails (11, 12), depending on a pre-determined type of operation of the apparatus (10), are delivered by means of a drive (27) on the output side to the input (15) of the second machine (P) or to the input (16, 17) of another device (18, 19), wherein the bendable guide rails (11, 12) are kept at a pre-determined distance by means of the spacers (23) arranged in-between if the guide rails (11, 12) curve.

2. Apparatus (10) according to claim 1, **characterised in that** a sensor apparatus (24) is provided on the input side of the guide rails (11, 12).

3. Apparatus (10) according to claim 1 or 2, **characterised in that** the spacers (23) are arranged in a fixed manner on one side of the guide rails (11, 12).

4. Apparatus (10) according to one of claims 1 to 3, **characterised in that** at least one conveyor apparatus, in particular chain conveyor, preferably a chain conveyor with a drive (21), is provided in the conveying section (FA) between the input side (13) of the guide rails and the output side (14) of the guide rails (11, 12).

5. Apparatus (10) according to claim 4, **characterised in that** a drive (21) is provided for the conveyor apparatus.

6. Apparatus (10) according to claim 5, **characterised in that** the drive (21) is arranged on the output side (14) of the guide rails (11, 12).

7. Apparatus (10) according to one of claims 1 to 6, **characterised in that** a guide support (26) is provided on the output side (14) of the guide rails (11, 12) so that the output side (14) of the guide rails (11, 12) moves or is moved or leads or is led transversely to the conveying direction with regard to the conveying direction.

8. Apparatus (10) according to one of claims 1 to 7, **characterised in that** the guide rails (11, 12) are moveable in such a way that the mass flow diverts or is diverted by means of the guide rails (11, 12) with regard to the conveying direction on the input side and output side, to the guide rails (11, 12) by an angle between 0° and 45°, preferably between 0° and 30°.

9. Apparatus (10) according to one of claims 1 to 8, **characterised in that** the conveying of the mass flow (MS) in the area of the guide rails (11, 12) is performed or takes place on a, preferably horizontal, plane.

## Revendications

1. Dispositif (10) pour le transport d'articles en forme de bâtonnets de l'industrie de la transformation du tabac en un flux massique (MS) entre des machines de l'industrie de la transformation du tabac (M, P), le long d'un trajet de transport (F) entre une sortie (41) d'une première machine (M), en particulier d'une machine de fabrication (M), et une entrée (15) d'une deuxième machine (P), en particulier d'une machine d'empaquetage (P), dans lequel, sur la longueur du trajet de transport (F), il est prévu un dispositif d'aiguillage réglable, de sorte qu'en fonction de la position du dispositif d'aiguillage, un flux massique (MS) est transporté sélectivement vers l'entrée (15) de la deuxième machine (P) ou vers l'entrée (16, 17) d'un autre appareil (18, 19) de l'industrie de la transformation du tabac, **caractérisé en ce qu'**en aval de la sortie (41) de la première machine (M), relativement à la direction du transport du flux massique (MS), sont prévus, pour le trajet de transport (F) du flux massique (MS), des rails de guidage latéraux capables de s'incurver de façon flexible (11, 12), les rails de guidages latéraux (11, 12) délimitant, pour le trajet de transport (F), un segment de transport (FA) pour le transport du flux massique (MS), les rails de guidage (11) étant disposés selon un écartement entre eux prédéterminé et des pièces d'écartement (23) étant prévues entre les rails de guidage (11, 12), transversalement à la direction du transport du flux massique (MS), selon un écartement entre elles prédéterminé, les rails de guidage (11,12) étant fixes en position à leur côté entrée (13) et étant mobiles ou déplaçables à leur côté sortie (14), et les rails de guidage (11, 12) étant orientés à leur sortie, en fonction d'un mode de fonctionnement prédéterminé du dispositif (10), au moyen d'un entraînement (27), vers l'entrée (15) de la deuxième machine (P) ou vers l'entrée (16, 17) d'un autre appareil (18, 19), les rails de guidage flexibles (11,12) étant maintenus à un écartement prédéterminé pendant la courbure des rails de guidage (11, 12) au moyen des pièces d'écartement (23) disposées entre eux.

2. Dispositif (10) selon la revendication 1, **caractérisé en ce qu'**un dispositif détecteur (24) est prévu sur le côté entrée des rails de guidage (11, 12).

3. Dispositif (10) selon la revendication 1 ou 2, **caractérisé en ce que** les pièces d'écartement (23) sont montées fixes sur un côté des rails de guidage (11, 12).

4. Dispositif (10) selon l'une des revendications 1 à 3, **caractérisé en ce que**, dans le segment de transport (FA), entre le côté entrée (13) des rails de guidage et le côté sortie (14) des rails de guidage (11, 12), est prévu au moins un dispositif de transport, en particulier un transporteur à chaîne, de préférence un transporteur à chaîne équipé d'un entraînement (21).

5. Dispositif (10) selon la revendication 4, **caractérisé en ce qu'**il est prévu un entraînement (21) pour le dispositif de transport.

6. Dispositif (10) selon la revendication 5, **caractérisé en ce que** l'entraînement (21) est disposé au niveau du côté sortie (14) des rails de guidage (11, 12).

7. Dispositif (10) selon l'une des revendications 1 à 6, **caractérisé en ce qu'**un support de guidage (26) est prévu au niveau du côté sortie (14) des rails de guidage (11, 12), de sorte que le côté sortie (14) des rails de guidage (11, 12) est ou sera déplacé ou guidé, par rapport à la direction du transport, transversalement à la direction du transport.

8. Dispositif (10) selon l'une des revendications 1 à 7, **caractérisé en ce que** les rails de guidage (11, 12) peuvent être déplacés de telle sorte qu'au moyen des rails de guidage (11, 12), le flux massique est ou sera dévié, par rapport à la direction de transport sur les rails de guidage (11, 12) côté entrée et côté sortie, d'un angle compris entre 0 ° et 45 °, de préférence entre 0 ° et 30 °.

9. Dispositif (10) selon l'une des revendications 1 à 9, **caractérisé en ce que**, dans la zone des rails de guidage (11, 12), le transport du flux massique (MS) est exécuté ou s'effectue dans un plan de préférence horizontal.
